# EUROPÄISCHE PATENTSCHRIFT

(11) **EP 1 015 785 B1**
(45) Veröffentlichungstag und Bekanntmachung des Hinweises auf die Patenterteilung: **10.11.2004**
(21) Anmeldenummer: 98951305.6
(22) Anmeldetag: 19.08.1998
(51) Int. Cl.: F16D 25/08

(54) **NEHMERZYLINDERGEHÄUSE AUS KUNSTSTOFF, IN DAS EINE FÜHRUNGSHÜLSE AUS METALL EINGESETZT IST**
SLAVE-CYLINDER HOUSING MADE OF PLASTICS AND CONTAINING A GUIDE SLEEVE MADE OF STEEL
CARTER DE VERIN RECEPTEUR EN MATIERE PLASTIQUE RENFERMANT UNE DOUILLE DE GUIDAGE EN ACIER

(30) Priorität: 26.09.1997 DE 19742468
(43) Veröffentlichungstag der Anmeldung: 05.07.2000
(73) Patentinhaber: LuK Lamellen und Kupplungsbau Beteiligungs KG, 77813 Bühl (DE)
(72) Erfinder: SCHNEIDER, Berthold, D-91315 Höchstadt (DE); SCHAAF, Peter, D-91413 Neustadt (DE); WELTER, Roland, D-91086 Aurachtal (DE); PROSCH, Gerhard, D-91315 Höchstadt (DE)
(86) Internationale Anmeldenummer: PCT/EP1998/005271
(87) Internationale Veröffentlichungsnummer: WO 1999/017032

(56) Entgegenhaltungen:
- WO-A-96/24781
- DE-A- 19 523 218
- DE-U- 29 608 918
- FR-A- 2 757 590
- GB-A- 2 259 555

## Beschreibung

### Gebiet der Erfindung

Die Erfindung bezieht sich auf ein hydraulisch betätigbares Ausrücksystem, das auch als Zentralausrücker bezeichnet werden kann, für eine Kraftfahrzeug-Reibungskupplung.

### Hintergrund der Erfindung

Ein solches Ausrücksystem ist aus der DE 43 13 346 bekannt. Der aus diesem Stand der Technik bekannte Nehmerzylinder umfasst zwei im radialen Abstand zueinander angeordnete, rohrförmige Blechkörper, die auf ihrer dem Getriebegehäuse zugewandten Seite unlösbar und abgedichtet miteinander verbunden sind. Der radial äußere Blechkörper ist zur Druckmittelbeaufschlagung des Druckraums mit einer Öffnung versehen, in die ein Rohr eingepasst und mittels einer Lötung befestigt ist. Ein derartiger, ausschließlich Stahlteile umfassender Nehmerzylinder erfordert für den Zusammenbau einen großen Montageaufwand und besitzt ein relativ hohes Gewicht. Durch den als separates Bauteil in das radial äußere rohrförmige Blechteil eingesetzten Druckstutzen ergibt sich neben einer Bauteilvergrößerung eine weitere Trennstelle.

Aus der DE-A 41 29 370 ist ein Ausrücksystem bekannt, dessen Kolben-Zylinder-Einheit einen einteiligen, aus Kunststoff hergestellten Zylinder umfasst. Ein solcher Kunststoffzylinder erfordert ein aufwendiges Spritzgießverfahren, verbunden mit erhöhten Herstellkosten. Aufgrund der mit Hinterschnitten versehenen Zylinderkontur ist als Kunststoff ausschließlich ein Thermoplast einsetzbar, der eine Zwangsentformung ermöglicht. Festigkeitsbedingt sind die Wandungen eines aus Kunststoff hergestellten Zylinders stärker dimensioniert, was zu einer deutlichen Bauraumvergrößerung führt. Der relativ elastische Thermoplast, besitzt eine große Temperaturdehnung, die zusätzliche Maßnahmen für die Kolbendichtung erfordert.

Die WO 96/24781 offenbart ein hydraulisch betätigbares Ausrücksystem, bei dem in einem Zylinder eine Führungshülse aus Metall eingesetzt wird, deren Ringflansch über eine Vertiefung im hinteren Bereich des Zylinders in diesen eingepasst und zentriert ist.

### Aufgabe der Erfindung

Der vorliegenden Erfindung liegt die Aufgabe zugrunde, den Stand der Technik dahingehend weiterzuentwickeln, dass eine Verschleißkompensation der Kolbendichtung realisierbar ist bei kostengünstiger Herstellung des Nehmerzylinders.

### Zusammenfassung der Erfindung

Erfindungsgemäß wird die zuvor genannte Aufgabenstellung durch ein hydraulisch betätigbares Ausrücksystem mit den Merkmalen des Patentanspruchs 1 gelöst.

Der Erfindungsgedanke umfasst eine konische Ausbildung der Zylinderwandung. An dieser Zylinderwandung wird die radial äußere Dichtlippe der Kolbendichtung geführt. Die Ausformschräge ist dabei so ausgebildet, dass der Größtdurchmesser der Zylinderwandung auf der zum Ausrücklager gerichteten Seite vorgesehen ist und die lichte Weite der Führungsbahn sich zur Getriebeseite über die gesamte Länge der Zylinderwandung kontinuierlich verjüngt. Als Ausformschräge hat sich dabei ein Wert von zumindest 0,5° als wirksam erwiesen. Da sich mit zunehmendem Verschleiß der Mitnehmerscheibe von der Reibungskupplung die Neutrallage des Kolbens in Richtung des Getriebegehäuses verschiebt und auch die Kolbendichtung einem Verschleiß unterworfen ist, stellt die erfindungsgemäße Ausbildung der Zylinderwandung eine Verschleißkompensation der Kolbendichtung sicher. Die Durchmesserreduzierung der Zylinderwandung gleicht somit einem Dichtlippenverschleiß der Kolbendichtung aus, wodurch die Anpresskraft der äußeren Dichtlippe über die Gebrauchsdauer der Reibungskupplung nahezu konstant bleibt und die Gefahr einer Leckage unterbleibt.

Die Verwendung eines aus Kunststoff durch ein Spritzgießverfahren, Spritzprägen oder Spritzpressen hergestellten Zylinders in Verbindung mit einer aus Metall durch ein Tiefziehverfahren spanlos hergestellten Führungshülse stellt einen optimalen Kompromiss hinsichtlich einer ausreichenden Festigkeit und kostengünstigen Fertigung des Nehmerzylinders dar. Aufgrund der Formgebung des Zylinders, der erfindungsgemäß lediglich die Außenwandung des ringförmigen Druckraums einschließt, eignet sich ein derartig gestaltetes Bauteil bevorzugt für ein Spritzgießverfahren. Die Druckraumwandung kann dabei unter Berücksichtigung der erforderlichen gleich bleibenden Dauerfestigkeit dimensioniert werden, ohne dabei den durch die Außenabmessung des Ausrücklagers vorgegebenen radialen Bauraum zu beeinflussen bzw. zu überschreiten. Ein derartiges Kunststoffgehäuse ist gemäß der Erfindung mit einer dünnwandigen, spanlos durch ein Tiefziehverfahren hergestellten Stahl-Führungshülse kombiniert. Die erfindungsgemäße Paarung von Bauteilen unterschiedlicher Materialien gewährleistet für einen Nehmerzylinder, dass auch die im Betrieb, sich einstellende Erwärmung und die damit verbundenen Wärmedehnungen die Funktion, insbesondere die Dichtfunktion des Nehmerzylinders nicht beeinflussen.

Dieser Nehmerzylinderaufbau ermöglicht eine wirtschaftliche Herstellung, d. h. Entfall einer Nachbearbeitung der Dichtungslaufbahnen, optimiert den erforderlichen Bauraum und verbessert die Dauerfestigkeit. Gleichzeitig ist durch die Verwendung der Führungshülse aus Metall, vorzugsweise Stahlblech, die kritische Führungsfunktion des Kolbens verbessert, insbesondere im Vergleich zu einem einteiligen, aus Kunststoff hergestellten Geberzylindergehäuse. Zur Erzielung einer vorkomplettierten Baueinheit ist ein stimseitiger Ringflansch der Führungshülse über eine kraft-formschlüssige Verbindung, insbesondere mittels einer Schnappverbindung, am Zylinder befestigt.

In Ausgestaltung der Erfindung ist zur Herstellung des Kunststoffzylinders ein Spritzgießverfahren vorgesehen, das keinerlei Nachbearbeitung oder Nachbehandlung im Bereich der Abdichtung, d. h. der Dichtlippenlaufbahn an der Zylinderwandung und der Führungshülse bedarf.

Als Kunststoff für den Zylinder sind vorzugsweise Duroplaste, z. B. Phenoplaste, Aminoplaste, EP-Harze und UP-Harze vorgesehen. Dieser mit geeigneten Füll- und Versteifungsstoffen versehene Kunststoff besitzt Festigkeitswerte, die annähernd der Festigkeit von Aluminium entsprechen. Weiterhin zeichnen sich Duroplaste im Vergleich zu anderen Kunststoffen durch eine geringe Wärmedehnung und eine hohe Reißdehnung aus. Alternativ schließt die Erfindung ebenfalls die Verwendung von Thermoplasten, z. B. Polyamide und PPA ein.

Zur Erzielung einer im Aufbau einfachen, effektiven Schnappverbindung zwischen dem Ringflansch der Führungshülse und dem Zylinder, ist der Ringflansch umfangsseitig gestuft gestaltet. Dabei bildet der Ringflansch einen Axialabschnitt, der am freien Ende einen radial nach außen gerichteten Bord umfasst, welcher in der Einbaulage an einer Hinterschneidung der Ringnut verrastet. Als Montagehilfe ist die Ringnut außenseitig mit einer Einführschräge versehen, die das Einführen des Ringflanschbordes vereinfacht. Die erfindungsgemäße Schnappverbindung dient ausschließlich zur Transportsicherung, die einen Zusammenhalt des vormontierten Geberzylinders ermöglicht. Im eingebauten Zustand des Nehmerzylinders ist der Ringflansch der Führungshülse zwischen dem Getriebegehäuse und der Stirnseite des Zylinders lagefixiert gehalten.

Nach einem weiteren Merkmal der Erfindung ist der Druckstutzen des Gehäuses mit getrennt angeordneten Längsbohrungen bzw. Längskanälen versehen, die zur Druckmittelführung bzw. zur Be- und Entlüftung des Ausrücksystems vorgesehen sind. Am freien Ende des Druckstutzens ist einer Längsbohrung ein Druckanschluss und der weiteren Bohrung ein Ventil zur Be- und Entlüftung des Ausrücksystems zugeordnet. Stichbohrungen am Druckstutzen sind dabei wirksam abgedichtet, beispielsweise verschweißt, verklebt bzw. mittels eines separaten Bauteils verpresst oder verschraubt.

Als eine verbesserte Maßnahme den erfindungsgemäßen Kunststoffzylinder mit einer Schraubenverbindung sicher am Getriebegehäuse zu befestigen sind in die Aufnahmebohrungen von Befestigungsösen des Zylinders Stahlhülsen eingesetzt. Damit ist ein unkontrolliertes Fließen des Kunststoffs beim Festziehen der Schraube unterbunden. Vorzugsweise werden radial vorgespannte, geschlitzte Stahlhülsen verwendet, deren Länge kleiner ist als die Wandstärke der Befestigungshülsen, um so eine kontrollierte Verspannung des Kunststoffs durch die Befestigungsschrauben zu erzielen. Außerdem kann es vorteilhaft sein, die Stahlhülse schraubenkopfseitig mit einer Scheibe zu versehen, mit der eine großflächigere Verpressung des Kunststoffs im Bereich der Befestigungsösen erzielbar ist.

### Kurze Beschreibung der Zeichnungen

Die Erfindung wird anhand von einem Ausführungsbeispiel in insgesamt vier Figuren dargestellt. Es zeigen:
- Figur 1: den Aufbau eines vorkomplettierten Geberzylinders;
- Figur 2: in einem Längsschnitt den Zylinder und die Führungshülse des in Figur 1 abgebildeten Geberzylinders;
- Figur 3: die Vorderansicht des in Figur 1 abgebildeten Geberzylinders;
- Figur 4: die Einzelheit "Z" aus Figur 2 in einem vergrößerten Maßstab.

### Ausführliche Beschreibung der Zeichnungen

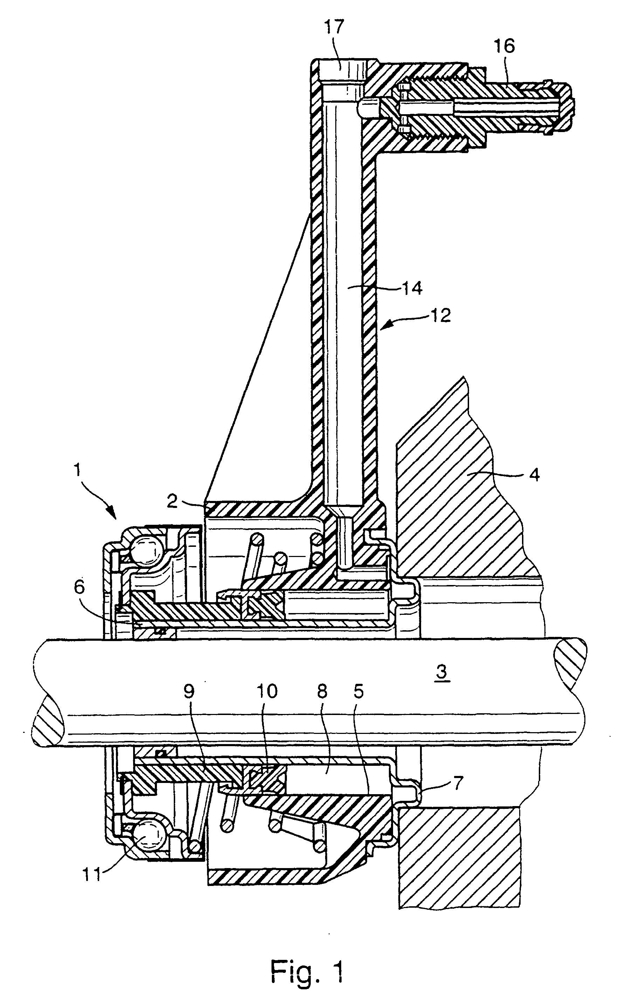

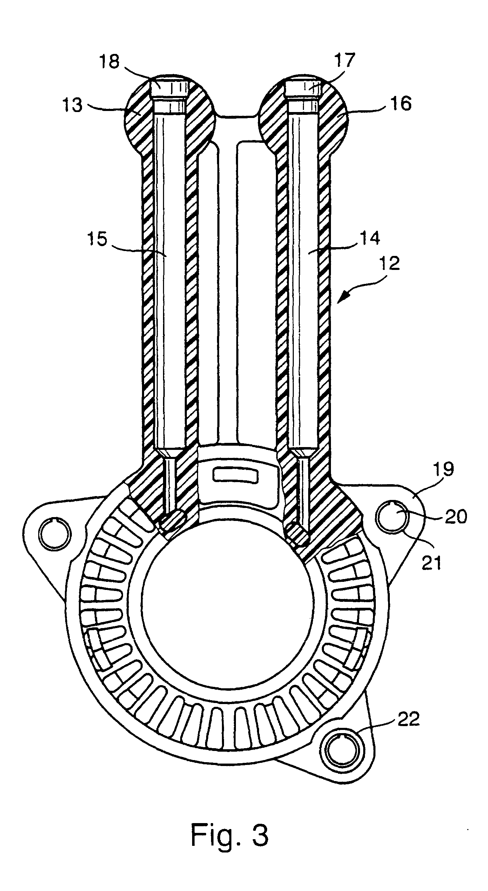

Aus der Figur 1 ist ein hydraulisch betätigbares Ausrücksystem 1 bekannter Bauart zu entnehmen. Der Aufbau des auch als Zentralrücker zu bezeichnenden Ausrücksystems 1 umfaßt eine Kolben-Zylinder-Einheit, deren Zylinder 2 konzentrisch um eine Getriebeeingangswelle 3 angeordnet und über eine Schraubenverbindung lösbar am Getriebegehäuse 4 befestigt ist. Im Zylinder 2 ist eine sowohl zu einer Zylinderwandung 5 als auch zur Getriebeeingangswelle 3 radial beabstandete, spanlos durch ein Tiefziehverfahren hergestellte Führungshülse 6 aus Metall, vorzugsweise Stahlblech, eingesetzt. An der zum Getriebegehäuse 4 gerichteten Seite ist an die Führungshülse 6 ein Ringflansch 7 angeformt, der mehrfach gestuft in der Einbaulage zwischen dem Zylinder 2 und dem Getriebegehäuse 4 gehalten ist. Ein kreisringförmig gestalteter Ringraum, der sich zwischen der Führungshülse 6 und der Zylinderwandung 5 einstellt, dient als Druckraum 8. Dieser Druckraum 8 ist axial vom Ringflansch 7 und dem Kolben 9 begrenzt. Dem Kolben 9 ist druckraumseitig eine Nutringdichtung 10 vorangestellt, deren Dichtlippen an der Führungshülse 6 und der Zylinderwandung 5 dichtend anliegen. Auf dem vom Druckraum 8 abgewandten Ende ist ein Ausrücklager 11 am Kolben 9 befestigt, das im eingebauten Zustand des Ausrücksystems 1 an Ausrückhebeln der Reibungskupplung abgestützt ist. Zur Betätigung der in Figur 1 nicht dargestellten Reibungskupplung ist eine Axialverschiebung des Kolbens 9 von der obigen Stellung in die untere Stellung erforderlich. Eine Kolbenverschiebung kann ausgelöst werden durch eine Druckmittelbeaufschlagung des Druckraums 8. Dazu ist der Zylinder 2 einstückig mit einem radial ausgerichteten Druckstutzen 12 versehen, der am freien Ende rechtwinkelig abgekantet ist und einen Druckanschluß 13 (Fig. 3) aufweist zum Anschluß einer Druckleitung, welche das Ausrücksystem 1 mit einem Geberzylinder verbindet, der von einer in Figur 1 nicht dargestellten zugehörigen Pendelanordnung manuell zu betätigen ist. Der Druckstutzen 12 verfügt dabei über zwei in Figur 3 abgebildete axial beabstandet angeordnete Längsbohrungen 14, 15. Die Längsbohrung 14 dient dabei zur Be- und Entlüftung des Druckraums 8 und ist dazu am freien Ende mit einem rechtwinkelig ausgerichteten Ventil 16 versehen. Die weitere Längsbohrung 15 dient ausschließlich zur Druckmittelführung. Zur Erzielung einer wirksamen Abdichtung sind Stichbohrungen zu beiden Längsbohrungen 14, 15 mittels Stopfen 17, 18 abgedichtet, die vorzugsweise durch eine Schweißung oder Klebung befestigt sind.

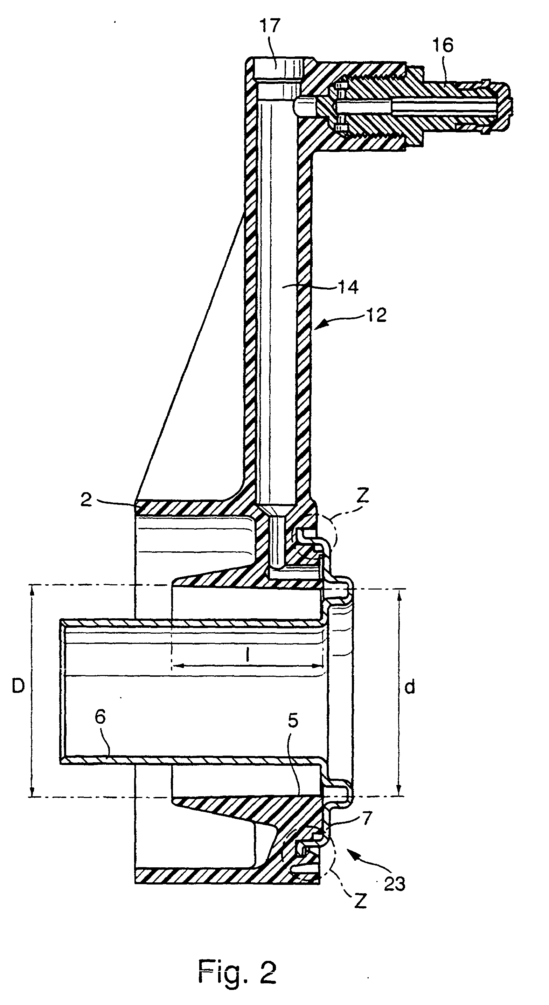

Figur 2 zeigt den Zylinder 2, der mit der Führungshülse 6 die Gehäuseeinheit bildet. Diese Darstellung verdeutlicht die Vorteile, die sich durch die Erfindung einstellen. Der durch ein Spritzgießverfahren aus Kunststoff hergestellte Zylinder 2 erfordert keinerlei Nacharbeit der Dichtlippenlaufbahn im Bereich der Zylinderwandung 5 und der Führungshülse 6, wodurch sich ein Kostenvorteil einstellt. Die Gestaltung des Zylinders 2, der einstückig mit dem Druckstutzen 12 verbunden ist, vermeidet eine Trennstelle und ermöglicht gleichzeitig eine steifere Gestaltung. Die relativ dünnwandig ausgebildete Führungshülse 6 aus Metall ist durch ein spanloses Tiefziehverfahren kostengünstig in großen Stückzahlen herstellbar. Im Vergleich zu einteiligen Nehmerzylindergehäusen aus Kunststoff besitzt die Stahl-Führungshülse neben einem verringerten radialen Bauraum eine verbesserte Führungsfunktion für den Kolben 9. Dadurch beeinflußt die im Betrieb auftretende Erwärmung aller Bauteile des Ausrücksystems 1 nicht die Führung des Kolbens. Der Zylinder 2 ist weiterhin mit einer Zylinderwandung 5 versehen, an der die radiai äußere Dichtlippe der Nutringdichtung 10 (Fig. 1) geführt ist. Diese Zylinderwandung besitzt eine Anformschräge bzw. eine Konizität, deren größter Durchmesser "D" ausrücklagerseitig angeordnet ist und der Durchmesser sich über die Länge "l" kontinuierlich bis zum Durchmesser "d" verjüngt.

Diese Konizität ermöglicht eine Verschleißkompensation der Kolbendichtung, da sich mit zunehmendem Verschleiß der Reibungskupplung - Mitnehmerscheibe die Neutrallage des Kolbens 9 in Richtung des Getriebegehäuses 4 verschiebt. Die sich dabei einstellende Durchmesserreduktion ist weitestgehend angepaßt an den verschleißbedingt nachlassenden Anpreßdruck der Dichtlippen von der Nutringdichtung 10.

Aus der in Figur 3 dargestellten Vorderansicht des Zylinders 2 sind deren Befestigungsösen 19 sichtbar, die umfangsverteilt angeordnet sind und deren Bohrungen 20 zur Aufnahme von Befestigungsschrauben dienen. Aus Gründen der Festigkeit sind in die Bohrungen 20 geschlitzte, radial vorgespannte Stahlhülsen 21 eingesetzt, die ein Verpressen des Kunststoffs im Bereich der Befestigungsösen 19 beim Festziehen der Befestigungsschrauben begrenzt. Weiterhin kann die Stahlhülse 21 schraubenkopfseitig mit einer Scheibe 22 versehen sein, an der sich der Schraubenkopf abstützt. Die Figur 3 zeigt weiter die Ausbildung des Druckstutzens 12, in dem zwei axial beabstandete Längsbohrungen 14, 15 eingebracht sind, an die sich am freien Ende des Druckstutzens 12 ein rechtwinkelig ausgerichteter Druckanschluß 13 sowie ein Ventil 16 anschließen.

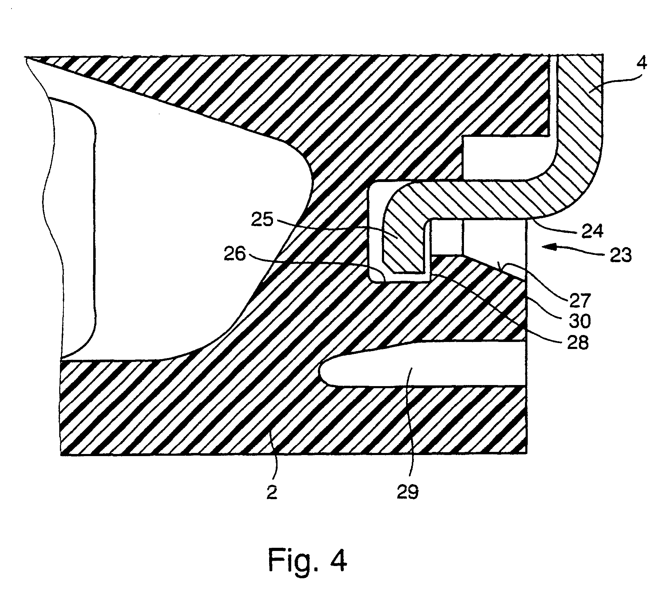

Die Einzelheit "Z" aus Figur 2, die eine Schnappverbindung 13 zwischen dem Ringflansch 7 und dem Zylinder 2 zeigt, ist in Figur 4 in einem vergrößerten Maßstab abgebildet. Die Schnappverbindung 23 bildet eine Verliersicherung, mit der die Führungshülse 6 am Zylinder 2 gehalten ist. Zur Ausgestaltung der Schnappverbindung 23 ist der Ringflansch 7 der Führungshülse 6 umfangsseitig mit einer rechtwinkeligen Abkantung versehen zur Schaffung eines Axialabschnitts 24, welcher endseitig einen radial nach außen gerichteten Bord 25 aufweist. Der Zylinder 2 besitzt dazu stirnseitig eine Ringnut 26, die als Montagehilfe zum leichteren Einführen des Axialabschnitts 24 außenseitig mit einer Einführschräge 27 versehen ist. Die Ringnut 26 besitzt weiterhin eine Hinterschneidung 28, an der im eingebauten Zustand der Führungshülse 6 der Bord 25 verrastet. Konzentrisch zur Ringnut 26 ist der Zylinder 2 mit einem Einschnitt 29 versehen, deren Länge die der Ringnut 26 übertrifft, und die ein radiales Ausweichen der Schnappnase 30 beim Einführen des Axialabschnitts 24 der Führungshülse 6 erleichtert. Zur Erzielung einer verdrehgesicherten Befestigung der Führungshülse 6 am Zylinder 2 schließt die Erfindung gleichfalls anstelle eines umlaufenden Axialabschnitts 24 eine partielle Anordnung ein, die in ebenfalls umfangsverteilte Ausnehmungen des Zylinders 2 eingepaßt sind.

### Bezugszahlenliste

- 1: Ausrücksystem
- 2: Zylinder
- 3: Getriebeeingangswelle
- 4: Getriebegehäuse
- 5: Zylinderwandung
- 6: Führungshülse
- 7: Ringflansch
- 8: Druckraum
- 9: Kolben
- 10: Nutringdichtung
- 11: Ausrücklager
- 12: Druckstutzen
- 13: Druckanschluß
- 14: Längsbohrung
- 15: Längsbohrung
- 16: Ventil
- 17: Stopfen
- 18: Stopfen
- 19: Befestigungsöse
- 20: Bohrung
- 21: Stahlhülse
- 22: Scheibe
- 23: Schnappverbindung
- 24: Axialabschnitt
- 25: Bord
- 26: Ringnut
- 27: Einführschräge
- 28: Hinterschneidung
- 29: Einschnitt
- 30: Schnappnase

## Patentansprüche

1. Hydraulisch betätigbares Ausrücksystem (1) für eine Kraftfahrzeug-Reibungskupplung bestehend aus einem konzentrisch zu einer Getriebeeingangswelle (3) angeordneten Nehmerzylinder, der als eine Kolben-Zylinder-Einheit ausgeführt ist, mit einem aus kunststoff hergestellten Zylinder (2), der an einem Getriebegehäuse (4) befestigt ist, und einem Kolben (9), der auf einer zur Zylinderwandung (5) und zur Getriebeeingangswelle (3) radial beabstandeten Führungshülse (6) geführt ist, wobei die aus Metall ausgeführte Führungshülse (6) endseitig einen Ringflansch (7) aufweist und mittels einer Schnappverbindung am Zylinder (2) befestigt ist und der Ringflansch (7) in einer Einbaulage zwischen dem Getriebegehäuse (4) und einer Stirnseite des Zylinders (2) angeordnet ist, wobei der Ringflansch (7) gemeinsam mit dem Kolben (9) einen kreisringförmigen Druckraum (8) begrenzt, der von einem Druckmittel beaufschlagbar ist, wobei das Druckmittel über einen einstückig mit dem Zylinder (2) verbundenen, radial ausgerichteten Druckstutzen zuführbar ist, wobei der Druckstutzen (12) neben einer Druckmittelführung eine Entlüftung des Ausrücksystems (1) aufweist, der Kolben (9) mit einer Nutringdichtung (10) versehen ist, die an der Zylinderwandung (5) und der Führungshülse (6) dichtend anliegt, und auf der vom Druckraum abgewandten Seite des Kolbens ein Ausrücklager angeordnet ist und wobei die Zylinderwandung (5) konisch ausgebildet ist, derart, dass sich ihre Führungsbahn von der zum Ausrücklager (11) gerichteten Seite zur Getriebeseite hin kontinuirlich verjüngt.

2. Ausrücksystem nach Anspruch 1, **dadurch gekennzeichnet, dass** die Zylinderwandung (5) eine Konizität von einem Winkel von mindestens 0,5 ° besitzt, wobei sich ein Durchmesser "D" von der Seite des Ausrücklagers (11) beginnend über eine Länge "I" kontinuierlich bis zu einem Durchmesser "d" verjüngt.

3. Ausrücksystem nach Anspruch 1, **dadurch gekennzeichnet, dass** der Ringflansch (7) umfangsseitig gestuft gestaltet ist und einen in eine stirnseitige Ringnut (26) des Zylinders (2) eingreifenden Axialabschnitt (24) bildet, dessen radialer Bord (25) an einer Hinterschneidung (28) des Zylinders (2) verrastet.

4. Ausrücksystem nach Anspruch 3, **dadurch gekennzeichnet, dass** der Axialabschnitt (24) außen eine Einführschräge (27) bildet.

5. Ausrücksystem nach den Anspruch 1, **dadurch gekennzeichnet, dass** Längsbohrungen (14, 15) zur Druckmittelführung und zur Be- und Entlüftung des Ausrücksystems (1) am freien Ende des Druckstutzens (12) abgedichtet sind

6. Ausrücksystem nach den Anspruch 1, **dadurch gekennzeichnet, dass** ein Ventil (16) zur Entlüftung des Ausrücksystems (1) sowie ein Druckanschluss (13) unlösbar mit dem Druckstutzen (12) verbunden sind

7. Ausrücksystem nach den Anspruch 1, **dadurch gekennzeichnet, dass** in Befestigungsösen (19) des Zylinders (2), die zur Aufnahme von Schrauben dienen und mit denen der Zylinder (2) am Getriebegehäuse (4) verschraubt ist, Stahlhülsen (21) eingesetzt sind.

8. Ausrücksystem nach den Anspruch 7, **dadurch gekennzeichnet, dass** radial vorgespannte, geschlitzte Stahlhülsen (21) eingesetzt sind, die schraubenkopfseitig mit einer Scheibe versehen sind

## Claims

1. A hydraulically actuatable disengaging system (1) for a motor vehicle friction clutch, including a slave cylinder, positioned concentrically to a transmission driving shaft (3), which is implemented as a piston-cylinder unit, having a cylinder (2), manufactured from plastic, which is attached to a transmission housing (4), and a piston (9), which is guided on a guide sleeve (6), spaced radially from the cylinder wall (5) and from the transmission driving shaft (3), the guide sleeve (6), which is made of metal, having a ring flange (7) on its end and being attached to the cylinder (2) using a snap connection and the ring flange (7) being positioned in an installation position between the transmission housing (4) and a face of the cylinder (2), the ring flange (7), together with the piston (9), delimiting a circular pressure chamber (8) which may have a pressure agent applied to it, the pressure agent able to be supplied via a radially aligned pressure connecting piece connected to the cylinder (2) in one piece, the pressure connecting piece (12) having, in addition to a pressure agent guide, a vent of the disengaging system (1), the piston (9) being provided with a groove-ring seal (10), which presses against the cylinder wall (5) and the guide sleeve (6) to form a seal, and a release bearing being positioned on the side of the piston facing away from the pressure chamber, and the cylinder wall (5) being implemented conically in such a way that its guide path narrows continuously from the side pointing toward the release bearing (11) to the transmission side.

2. The disengaging system according to Claim 1,
**characterized in that** the cylinder wall (5) has a conicity of an angle of at least 0.5°, a diameter "D" tapering continuously over a length "1", beginning from the side of the release bearing (11), down to a diameter "d".

3. The disengaging system according to Claim 1,
**characterized in that** the ring flange (7) is designed as stepped around its circumference and forms an axial section (24), engaging in a front ring groove (26) of the cylinder (2), whose radial rim (25) catches on an undercut (28) of the cylinder (2).

4. The disengaging system according to Claim 3,
**characterized in that** the axial section (24) forms an insertion bevel (27) on the outside.

5. The disengaging system according to Claim 1,
**characterized in that** lengthwise holes (14, 15) for pressure agent supply and for aerating and ventilating the disengaging system (1) are sealed at the free end of the pressure connecting piece (12).

6. The disengaging system according to Claim 1,
**characterized in that** a valve (16) for ventilating the disengaging system (1) and a pressure connection (13) are permanently connected to the pressure connecting piece (12).

7. The disengaging system according to Claim 1,
**characterized in that** steel sleeves (21) are inserted into attachment eyelets (19) of the cylinder (2), which are used to receive screws and using which the cylinder (2) is screwed onto the transmission housing (4).

8. The disengaging system according to Claim 7,
**characterized in that** radially pre-tensioned, slotted steel sleeves (21), which are provided on the screwhead side with a washer, are inserted.

## Revendications

1. Système de débrayage (1) pouvant être actionné par voie hydraulique et destiné à un embrayage à friction de véhicule automobile, constitué d'un vérin récepteur disposé concentriquement à un arbre d'entrée de boite de vitesses (3) et réalisé sous forme d'unité à piston et cylindre qui comprend un cylindre (2) réalisé en matière plastique et fixé sur un carter (4) de boite de vitesses, et un piston (9) qui est guidé sur une douille de guidage (6) espacée radialement de la paroi de cylindre (5) et de l'arbre d'entrée de boite de vitesses (3),
la douille de guidage (6) réalisée en métal présentant à son extrémité un flasque annulaire (7), et étant fixée au cylindre (2) par une liaison d'encliquetage, et le flasque annulaire (7) étant disposé, dans une position implantée, entre le carter (4) de boite de vitesses et une face frontale du cylindre (2),
le flasque annulaire (7) délimitant en commun avec le piston (9) une chambre de pression (8) de forme annulaire circulaire, qui peut être alimentée par un agent de pression,
l'agent de pression pouvant être amené par l'intermédiaire d'un embout de pression d'orientation radiale et relié d'un seul tenant au cylindre (2),
l'embout de pression (12) présentant, en-dehors d'un passage pour véhiculer l'agent de pression, une purge d'air du système de débrayage (1), le piston (9) étant pourvu d'un joint d'étanchéité à lèvres (10) qui s'appuie de manière étanche sur la paroi de cylindre (5) et la douille de guidage (6), et une butée de débrayage étant disposée sur le côté du piston, opposé à celui où se trouve la chambre de pression,
et la paroi de cylindre (5) étant d'une configuration conique de façon telle, que sa voie ou son passage de guidage se rétrécisse de manière continue à partir du côté dirigé vers la butée de débrayage (11), vers le côté de la boite de vitesses.

2. Système de débrayage selon la revendication 1, **caractérisé en ce que** la paroi de cylindre (5) possède une conicité d'un angle d'au moins 0,5°, un diamètre "D" se rétrécissant de manière continue, à partir du côté de la butée de débrayage (11), sur une longueur "l", jusqu'à un diamètre "d".

3. Système de débrayage selon la revendication 1, **caractérisé en ce que** le flasque annulaire (7) est d'une configuration étagée côté périphérique, et forme un tronçon axial (24) qui s'engage dans une rainure annulaire (26) frontale du cylindre (2), et dont le bord radial (25) s'enclenche au niveau d'une contre-dépouille (28) du cylindre (2).

4. Système de débrayage selon la revendication 3, **caractérisé en ce que** le tronçon axial (24) forme à l'extérieur, un chanfrein d'entrée (27).

5. Système de débrayage selon la revendication 1, **caractérisé en ce que** des alésages longitudinaux (14, 15) pour véhiculer l'agent de pression et pour l'aération et la purge d'air du système de débrayage (1), sont rendus étanches à l'extrémité libre de l'embout de pression (12).

6. Système de débrayage selon la revendication 1, **caractérisé en ce qu'**une soupape (16) pour la purge d'air du système de débrayage (1), ainsi qu'un raccord de pression (13) sont liés de manière indémontable à l'embout de pression (12).

7. Système de débrayage selon la revendication 1, **caractérisé en ce que** des douilles (21) en acier sont insérées dans des oreilles de fixation (19) du cylindre (2), qui servent à recevoir des vis, et avec lesquelles le cylindre (2) est vissé sur le carter (4) de boite de vitesses.

8. Système de débrayage selon la revendication 7, **caractérisé en ce que** sont insérées des douilles (21) en acier, fendues, précontraintes radialement, qui sont pourvues d'une rondelle du côté de la tête de vis.
